Europäisches Patentamt

(19) European Patent Office

Office européen des brevets

(11) Veröffentlichungsnummer: **0 297 084**

**A1**

(12) # EUROPÄISCHE PATENTANMELDUNG

(21) Anmeldenummer: 88890158.4

(22) Anmeldetag: 20.06.88

(51) Int. Cl.⁴: **A 01 G 25/16**

(30) Priorität: 26.06.87 AT 1628/87

(43) Veröffentlichungstag der Anmeldung:
28.12.88 Patentblatt 88/52

(84) Benannte Vertragsstaaten:
DE ES FR GB GR IT

(71) Anmelder: **Röhren- und Pumpenwerk Rudolf Bauer Aktiengesellschaft**
**A-8570 Voitsberg (AT)**

(72) Erfinder: **Klug, Erich**
**Alleestrasse 7**
**A-8590 Köflach (AT)**

**Schittl, Josef**
**Erlengasse 12**
**A-8570 Voitsberg (AT)**

(74) Vertreter: **Piso, Eberhard, Dr. et al**
**Patentanwälte Dipl.-Ing. Herbert C.E. Krause Dr.**
**Eberhard Piso Gluckgasse 1 Fach 328**
**A-1010 Wien 1 (AT)**

(54) **Steuerung zur Regelung der Rohreinzugsgeschwindigkeit einer Trommelberegnungsmaschine.**

(57) Steuereinrichtung zur Regelung der Rohreinzugsgeschwindigkeit einer Trommelberegnungsmaschine mit einem Tastrahmen (1), welcher einen parallel zur Trommelachse liegenden Träger (2) und zwei jeweils mit den Enden des Trägers fest verbundene, beidseitig der Trommel schwenkbar gelagerte Holme (3) aufweist, wobei eine an den Windungen des aufgehaspelten Rohres anliegende Tastschiene (4) in ihren Endbereichen über Kippstäbe (5, 6) mit dem Träger (2) gelenkig verbunden ist, wodurch ein Gelenkviereck gebildet ist. Bei Schräglage der Tastschiene (4) zum Träger (2) erfolgt eine stetige Bewegung des Tastrahmens (1), der mit einem Regelorgan verbunden ist.

Ansicht A

FIG.2

FIG.3

EP 0 297 084 A1

## Beschreibung

Die Erfindung betrifft eine Steuerung zur Regelung der Rohreinzugsgeschwindigkeit einer Trommelberegnungsmaschine. Es ist eine fahrbare Beregnungsvorrichtung zur Beregnung landwirtschaftlicher Flächen bekannt, die eine Nachregelung durch eine an den Windungen des aufgehaspelten Rohres anliegende Querstange über eine Wippe auf ein Regelorgan wirken läßt. Mit diesem als Querstange ausgeführten Abtastbügel ist eine Nachregelung der Geschwindigkeit über das aufgehaspelte Rohr in derselben Lage nicht möglich, sondern es erfolgt erst mit dem nächsten Lagensprung eine Bewegung des Tastrahmens, wodurch eine Nachregelung ausgelöst wird.

Aufgabe der Erfindung ist es, eine stetige Geschwindigkeitsnachregelung vorzusehen, welche es ermöglicht, den Regnereinzug mit konstanter Geschwindigkeit durchzuführen. Die Erfindung löst die Aufgabe dadurch, daß die Steuereinrichttung einen Tastrahmen umfaßt, welcher einen parallel zur Trommelachse liegenden Träger und zwei, jeweils mit den Enden des Trägers verbundene, beidseitig der Trommel schwenkbar gelagerte Holme aufweist, daß eine an den Windungen des aufgehaspelten Rohres anliegende Tastschiene in ihren Endbereichen über Kippstäbe mit dem Träger gelenkig verbunden ist, wodurch ein Gelenkviereck gebildet ist, daß bei Schräglage der Tastschiene zum Träger eine stetige Bewegung des Tastrahmens erfolgt, und daß der Tastrahmen mit einem Regelorgan verbunden ist. Ein weiteres Merkmal der Erfindung ist es, daß der Träger in seinen Endbereichen mit verstellbaren Anschlägen für die Tastschiene versehen ist. Ein anderes Merkmal der Erfindung ist es, daß die Tastschiene und der Träger in deren Längsmittenbereich durch eine Feder verbunden sind, wodurch die Tastschiene in ihrer Schräglage fixiert wird. Ein anderes weiteres Merkmal der Erfindung ist es, daß an der Wickelvorrichtung ein mit der Tastschiene zusammenwirkender Schaltbügel angeordnet ist. Ferner besteht die Erfindung darin, daß die Tastschiene in ihren Endbereichen zur Aufnahme von Längskräften eine zum Träger hin ausgebildete Krümmung aufweist.

Die Erfindung wird im folgenden unter Zuhilfenahme der angeschlossenen Zeichnung näher beschrieben.

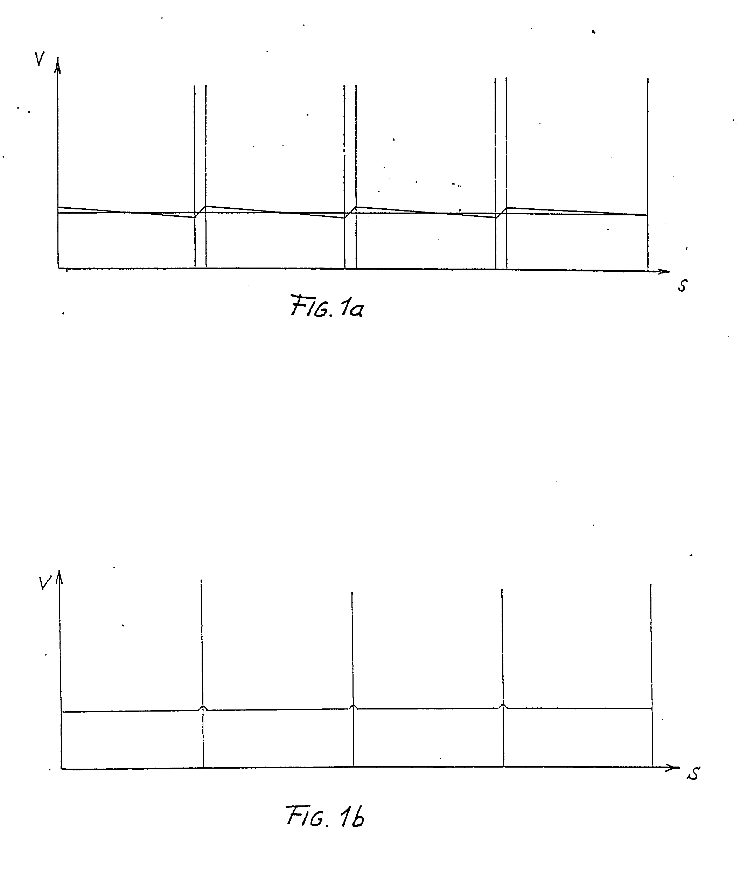

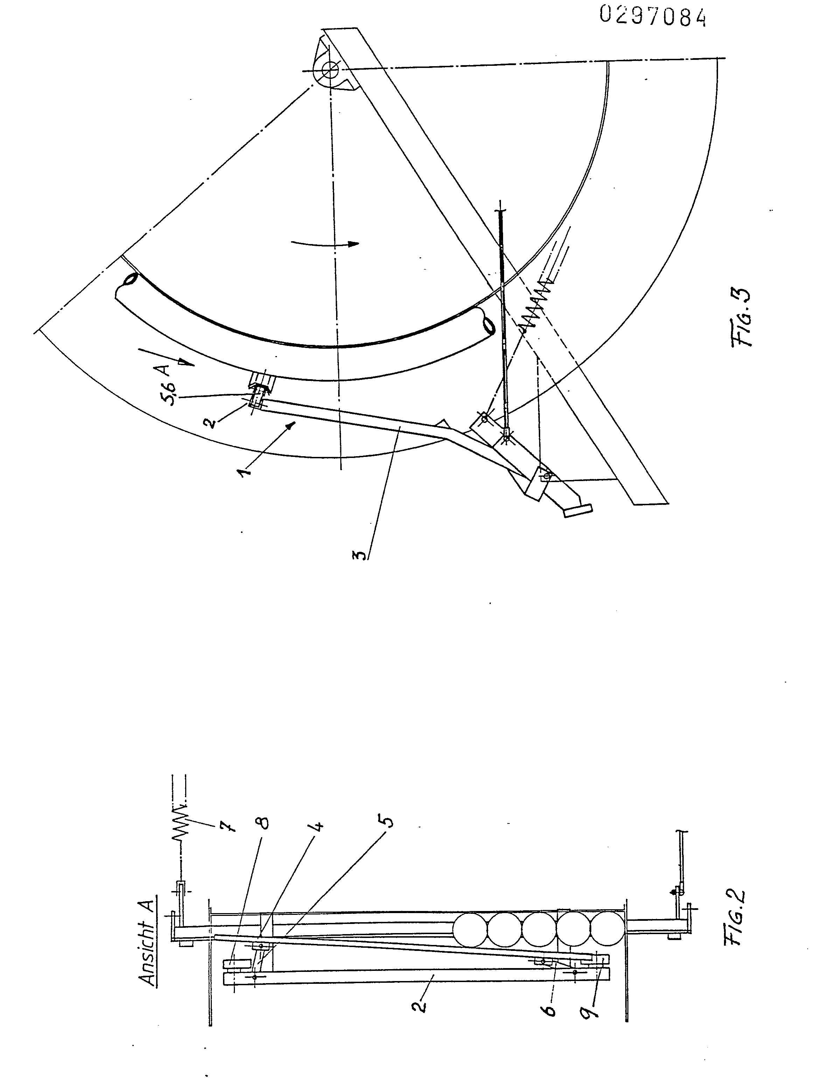

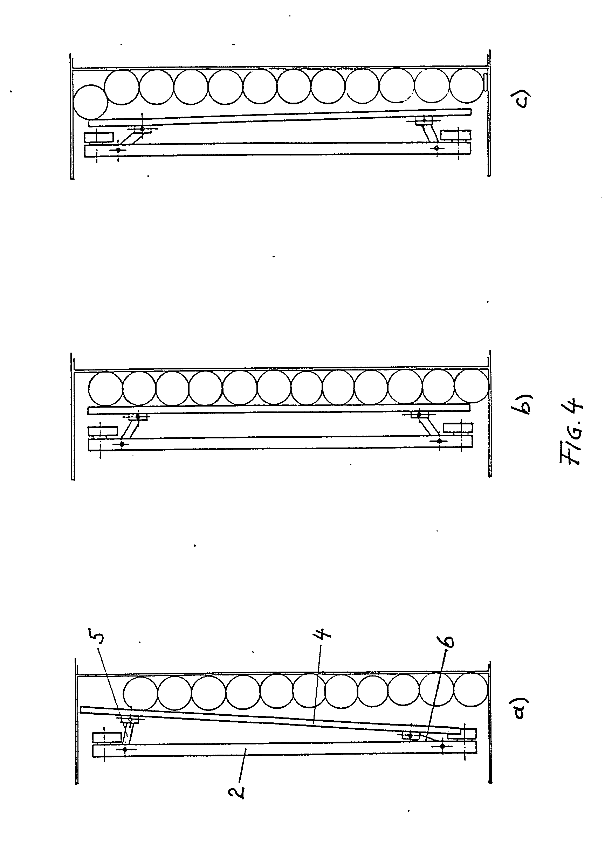

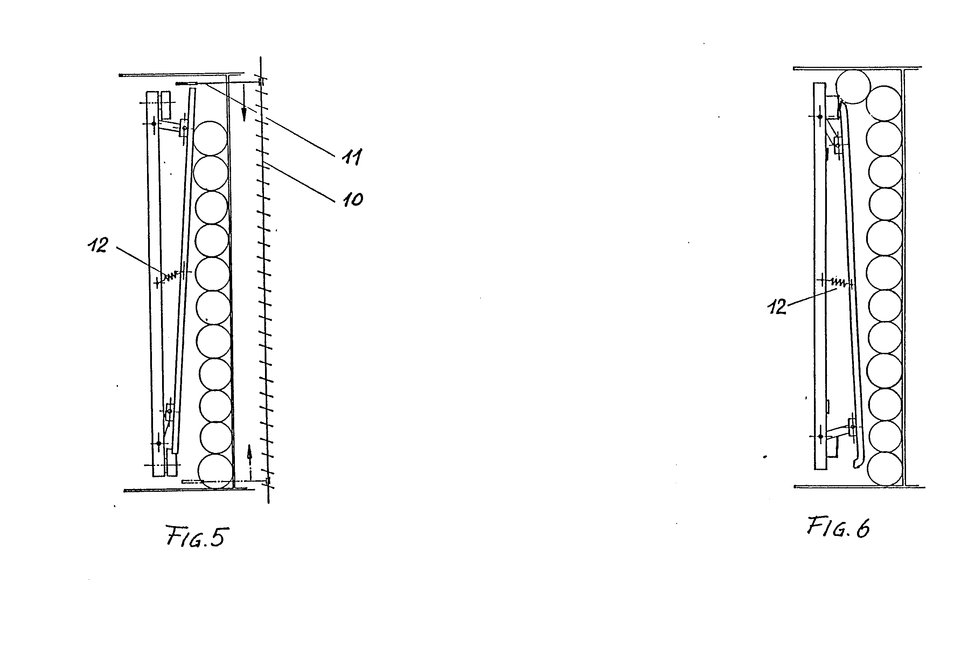

Es zeigen Fig.1a ein v-s-Diagramm einer herkömmlichen Steuer einrichtung mit einem starren Tastbügel; Fig.1b ein v-s-Diagramm der erfindungsgemäßen Steuereinrichtung; Fig.2 die erfindungsgemäße Steuereinrichtung in Draufsicht; Fig.4 eine Seitenansicht der Steuereinrichtung nach Fig.3; Fig.4 die erfindungsgemäße Steuereinrichtung in Draufsicht, Fig.5 und Fig.6 Varianten der Ausbildung nach Fig.2.

Die Konstruktion umfaßt einen Tastrahmen 1, welcher aus einem parallel zur Trommelachse liegenden Träger 2 und zwei, jeweils mit den Enden dieses Trägers fest verbundenen Holmen 3 besteht. Am Träger 2 befinden sich an den Endbereichen gelenkig angeordnete Kippstäbe, an denen die Tastschiene 4 ebenfalls gelenkig angebracht ist. Diese Tastschiene liegt an den Windungen des aufgehaspelten Rohres an. Durch die gelenkige Verbindung des Trägers 2 mit der Tastschiene 4 ist ein Gelenkviereck gebildet. Die Tastschiene wird gemeinsam mit dem Tastrahmen mittels Zugfeder 7 an den Rohrwickel angepaßt. Durch das Gelenkviereck ergibt sich eine Schrägstellung der Tastschiene 4 zum Träger 2 bzw. zum jeweiligen Rohrwickel (Fig.2). Am Träger sind des weiteren in seinen Randbereichen je ein Anschlag 8,9 angebracht, welcher in seiner Breite variierbar ist, um auch bei verschiedenen Rohrdurchmessern eine korrekte Abtastung des Rohrwickels durch die Tastschiene 2 zu gewährleisten. Der Träger ist vorzugsweise als U-Profil ausgebildet, um eine günstige Montage der Kippstäbe zu gewährleisten. Durch die Schrägstellung der Tastschiene 4 wird beim Aufwickeln des Rohres über die ganze Wickelbreite eine Hubbewegung des Tastrahmens erzwungen (Fig.4a bis c), welche sodann über ein entsprechend angeordnetes Gestänge auf das jeweilige Regelorgan, welches beispielsweise ein Schieberhebel, ein Turbinenverstellhebel etc. sein kann, einwirkt und so den Regelvorgang bewirkt.

Wird vom Rohr ein Lagenende erreicht, so wirkt die Andrückkraft des Tastrahmens außerhalb des Gelenkpunktes der Tastschienenaufhängung, wodurch eine Parallelstellung der Tastschiene (Fig.4b) zum Tastrahmen bzw. zum Rohrwickel erfolgt. Damit ist die Hubbewegung des Tastrahmens und damit auch die Geschwindigkeitsregelung in eben dieser Wickellage beendet. Durch das Überwickeln des Rohres in die nächste Wickellage wird die Tastschiene in die entgegengesetzte Schräglage gekippt (Fig.4c), der Tastrahmen wandert mit der Tastschiene wiederum um den Wert des Rohrdurchmessers nach außen, wodurch ein neues Regelspiel eingeleitet wird. Der Tastrahmen wandert also stetig nach außen und steuert über ein nicht gezeigtes Regelorgan eine nicht gezeigte Turbine derart, daß die Geschwindigkeit konstant gehalten wird. Diese Regelung erfolgt konstant bis zum Lagensprung, bei welchem kurzzeitig eine Geschwindigkeitserhöhung eintritt. Danach tritt wiederum konstante Geschwindigkeit ein (Fig.1b). Um die in Fig.1b gezeigten Geschwindigkeitsspitzen beim Lagensprung weiter zu reduzieren kann eine in Fig.5 gezeigte Zwangsumschaltung der Tastschiene verwendet werden. Die Tastschiene wird dabei durch einen mit der Wickelvorrichtung 10 gekuppelten bzw. direkt auf dieser aufgebauten Schaltbügel 11 zwangsweise umgeschaltet. Dieser Schaltbügel 11 schaltet die Tastschiene 4 um, bevor das Rohr zum Lagensprung aufsteigt, dadurch entstehen logischerweise kürzere Geschwindigkeitsspitzenwerte. Zur Fixierung der Schrägstellung der Tastschiene ist zwischen dieser und dem Tastrahmen eine Zugfeder 12 eingehängt. Eine weitere Variante der zwangsweisen Umschaltung ist in Fig.6 dargestellt. Dabei wird die Tastschiene mit einer zum Träger hin weisenden Krümmung ausgebildet,und durch das am Ende der jeweiligen Rohrlage in die nächste Wickellage aufsteigende Rohr so umgeschaltet, daß das Rohr die Tastschiene mittels einer Längskraft zur Seite drängt, wodurch die Tastschiene umgeschaltet und in die andere Schräglage gekippt wird. Dieses Schaltspiel wiederholt sich an jedem Wickelende. Indem die Breite der Anschläge variiert werden kann, kann damit auch die Bewegung des Tastrahmens bzw. des Regelorganes gesteuert werden; so wandert beispielsweise bei einem flachen Anschlag der Tastrahmen mehr.

**Patentansprüche**

1. Steuerung zur Regelung der Rohreinzugsgeschwindigkeit einer Trommelberegnungsmaschine, dadurch gekennzeichnet, daß die Steuereinrichtung einen Tastrahmen (1) umfaßt, welcher einen parallel zur Trommelachse liegenden Träger (2) und zwei, jeweils mit den Enden des Trägers fest verbundene, beidseitig der Trommel schwenkbar gelagerte Holme (3) aufweist, daß eine an den Windungen des aufgehaspelten Rohres anliegende Tastschiene (4) in ihren Endbereichen über Kippstäbe (5,6) mit dem Träger (2) gelenkig verbunden ist, wodurch ein Gelenkviereck gebildet ist, daß bei Schräglage der Tastschiene (4) zum Träger (2) eine stetige Bewegung des Tastrahmens (1) erfolgt und daß der Tastrahmen (1) mit einem Regelorgan verbunden ist.

2. Steuereinrichtung nach Anspruch 1, dadurch gekennzeichnet, daß der Träger (2) in seinen Endbereichen mit verstellbaren Anschlägen (8,9) für die Tastschiene (4) versehen ist.

3. Steuereinrichtung nach den Ansprüchen 1 und 2, dadurch gekennzeichnet, daß die Tastschiene und der Träger in deren Längsmittenbereich durch eine Feder (12) verbunden sind, wodurch die Tastschiene (4) in ihrer Schräglage fixiert wird.

4. Steuereinrichtung nach den Ansprüchen 1 und 2, dadurch gekennzeichnet, daß an der Wickelvorrichtung (10) ein mit der Tastschiene (4) zusammenwirkender Schaltbügel (11) angeordnet ist.

5. Steuereinrichtung nach den Ansprüchen 1 und 2, dadurch gekennzeichnet, daß die Tastschiene in ihren Endbereichen zur Aufnahme von Längskräften eine zum Trägen hin ausgebildete Krümmung aufweist.

0297084

FIG. 1a

FIG. 1b

0297084

Fig.3

Fig.2

Ansicht A

Fig. 4

FIG.5

11

10

12

FIG.6

12

0297084

**Europäisches Patentamt**

**EUROPÄISCHER RECHERCHENBERICHT**

Nummer der Anmeldung

EP 88890158.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | AT - B - 368 833 (RÖHREN- UND PUMPENWERK RUDOLF BAUER GESELLSCHAFT M.B.H) <br> * Anspruch 1 * <br><br> -- | 1,2 | A 01 G 25/16 |
| A | DE - A1 - 2 651 081 (LÜHR) <br> * Anspruch 1 * <br><br> -- | 1 | |
| A | DE - A1 - 2 619 229 (JAMES MACKIE & & SONS LTD.) <br> * Ansprüche 1,3 * <br><br> ---- | 1 | |

RECHERCHIERTE SACHGEBIETE (Int. Cl.4)

A 01 G

B 65 H

Der vorliegende Recherchenbericht wurde für alle Patentansprüche erstellt.

| Recherchenort | Abschlußdatum der Recherche | Prüfer |
|---|---|---|
| WIEN | 19-09-1988 | RIEMANN |